# EUROPEAN PATENT SPECIFICATION

(11) **EP 2 130 879 B1**
(45) Date of publication and mention of the grant of the patent: **01.02.2012**
(21) Application number: 09160191.4
(22) Date of filing: 14.05.2009
(51) Int. Cl.: C09D 11/00

(54) **Flush pigment for solid inkjet ink**
Flush-Pigment für feste Tintenstrahltinte
Pigment par voie humide pour encre jet d'encre solide

(30) Priority: 02.06.2008 US 131356
(43) Date of publication of application: 09.12.2009
(73) Proprietor: Xerox Corporation, Rochester, New York 14644 (US)
(72) Inventor: Wong, Raymond W., Mississauga Ontario L5M 4G8 (CA); Odell, Peter G., Mississauga Ontario L5J 1L3 (CA); Allen, Geoffrey C., Waterdown Ontario L0R 2H5 (CA); Carlini, Rina, Oakville Ontario L6H 0B9 (CA)
(74) Representative: Grünecker, Kinkeldey, Stockmair & Schwanhäusser

(56) References cited:
- EP-A- 1 712 601
- EP-A- 1 916 280
- EP-A- 2 036 956
- US-A1- 2003 127 021
- US-A1- 2004 261 656
- US-A1- 2008 098 930

## Description

The present disclosure is directed to a process for preparing a solid inkjet ink, and to a method of forming an image in which said solid inkjet ink is used.

In an acoustic or piezoelectric inkjet system, ink droplets are propelled to the recording medium by means of a piezoelectric oscillator. In such a system, a recording signal is applied to a recording head containing the piezoelectric oscillator, causing droplets of the ink to be generated and subsequently expelled through the printhead in response to the recording signal to generate an image on the recording medium. Such an inkjet system is described in more detail, for example, in U.S. Pat. No. 4,627,875.

Thermal inkjet printing processes are described in more detail, for example, in U.S. Pat. Nos. 5,169,437 and 5,207,824.

In these and other inkjet recording processes, it is necessary that the ink being used meet various stringent performance characteristics. These performance characteristics are generally more stringent than those for other liquid ink applications, such as for writing instruments.

Further, there are many requirements for the liquid compositions such as : (1) no clogging of nozzles of inkjet recording heads; (2) superior ejection stability and frequency responsiveness; (3) good recovery of smooth ink ejection after residing in printhead for a long time, such as greater than two weeks; (4) no generation of precipitates even after long-term storage; (5) no corrosion-deterioration of members, such as the recording heads, which contact therewith; (6) provision of favorable printing quality; (7) safety and no unpleasant odor; and the like.

Although numerous inkjet inks are presently available, they generally do not meet all of the above-described requirements, while also providing excellent print quality on plain paper. In particular, the inks generally used in inkjet printing processes, while producing acceptable print quality, do not produce the high print quality that is achieved by using dry toner compositions, such as in electrostatographic imaging processes.

A need exists in the inkjet industry for improved inkjet inks, and processes for producing the same, that satisfy the above-described requirements while providing high quality prints on a wide variety of recording media, including plain paper. Although some currently available inkjet inks may provide waterfast images with better substrate latitude, the inks are unacceptable in that they generally smear and have poor latency and maintainability characteristics. In addition, such inks are generally difficult to manufacture. Thus, there remains a need in the inkjet ink industry for improved black and colored inks that can be easily prepared and can be obtained at a lower cost.

One type of inkjet ink is a solid inkjet ink, herein referred to as an SIJ ink, that contain pigments. Pigments are insoluble, fine particle size materials used in a number of applications.

Pigments are generally produced in an aqueous medium. One of the steps in the manufacture of pigments is precipitation from water. After precipitating the pigment, the pigment/water slurry is then filtered in a filter press to concentrate the pigment and to form a press cake. The press cake is either dried to obtain a dry pigment, or "flushed" to transfer the pigment particles from the aqueous phase to a non-aqueous resin phase commonly referred to as a "flushed color". In the resulting flushed color state, the pigment particles are kept in a paste-like state for ultimate use in inks and coatings.

The current pigmented SIJ ink preparation process uses pigment in its finished dry form as colorant. The pigment in the dry form is harder to disperse owing to the formation of pigment agglomerates and aggregates during the pigment's drying stage. The pigment generally needs to be wetted with a dispersing agent to form a pigment dispersion before being mixed with other ink ingredients under a high shearing process to form an ink. Unfortunately, the current SIJ ink preparation process can consume a lot of energy to disperse the dried powder pigment in various SIJ ink media.

In order to solve the above-identified problems, this disclosure describes the use of a pigment flush as a color dispersion for an SIJ ink. Generally, flushing is the direct transfer of pigments in an aqueous phase to an oil or non-aqueous phase without intermediate drying. A pigment flush prepared, for example, through an aqueous press cake, can often have finer particle size and better color strength than its dried pigment analog. The preparation of pigment dispersions by using a pigment flush is more economical than preparing an SIJ ink from dried pigment. The tedious, strenuous and slow process of grinding and reducing a dried pigment's particle size can be reduced or eliminated.

Flushing of the pigment is carried out by intensely mixing a press cake with an ink oil or a flushing varnish. A "flushing varnish" is an ink oil containing a resin dissolved therein. The oil and/or flushing varnish is often referred to as a "flushing agent."

The present disclosure provides a process for preparing SIJ inks using a pigment flush. The process involves using a pigment flush as a color pigment predispersion for the preparation of an SIJ ink.

The present disclosure provides a process for preparing a solid inkjet ink, comprising
applying a first mixing step to a pigment and a flushing agent, wherein the pigment is part of an aqueous press cake;
flushing the pigment from an aqueous phase to a non-aqueous phase to form a pigment dispersion;
adding one or more ink ingredients to the pigment dispersion; and
applying a second mixing step to the pigment dispersion to incorporate the pigment dispersion with the one or more ink ingredients to form a solid inkjet ink.

The present disclosure further provides a method of forming an image, comprising applying the solid inkjet ink prepared by the above process to a substrate.

Preferred embodiments of the invention are set forth in the sub-claims.

Pigments at the press cake stage of manufacture have a particle size that is more suitable for maximum ink gloss and color strength in SIJ ink formulations than pigments in their finished dry form Accordingly, flushed pigments produced without first drying the pigment are preferred colorants for SIJ ink formulations.

The press cake is flushed at a high temperature, for example 100°C to 150°C, transferring the pigment particles from an aqueous phase to a non-aqueous phase to create a pigment dispersion. Generally, flushing is the direct transfer of pigments in an aqueous phase to a non-aqueous phase without intermediate drying. Flushing is carried out by intensely mixing the press cake with a flushing agent. The flushing agent can be a resin, for example, a triamide resin or a glycerol ester of a hydrogenated rosin, or mixtures thereof.

During the flushing process, in addition to a flushing agent, small amounts of flushing aids, such as surfactants, volatile polar vehicles, dispersants or polymers, alone or in combination, can also be added to the press cake to enhance the transfer of the pigment from aqueous phase to non-aqueous phase. The surfactants can be among known commercial surfactants, such as, Brij 76 and polyethylene glycol octadecyl ether, which can be obtained from ICI America Inc. Other dispersants can also be used. Additionally, any other commonly used pigment dispersant for non-aqueous pigment dispersions can be added during the flushing to enhance the dispersion of the pigment in the non-aqueous phase.

The first mixing step flushes a pigment from an aqueous phase to a non-aqueous phase to form a pigment dispersion. The mixing can be achieved by high torque mixing or by high shear mixing.

A high torque is required due to the high viscosity of the high pigment loading in resin. The apparatus used in high torque mixing can have a speed of, for example, from 2,000 rpm to 15,000 rpm. For high viscosity materials, the tip speed can be slowed and the torque increased, as is known in the art. The high torque mixing can have a tip speed of, for example, about 11,000 feet per minute. Lower speeds and greater torque can be achieved by methods known in the art.

High shear mixing can also be used to form a pigment dispersion. The dispersing elements of a high shear mixer can have a peripheral speed of, for example, 10 to 50 m/s, or more specifically, a peripheral speed of 20 to 25 m/s. In addition, the high shear mixing can have increased torque as well, and the peripheral speed can be adjusted by known methods.

During the first mixing step, the kinetic energy that is generated keeps the resin melted, disperses the pigment, and separates the water from the press cake. The temperature of the pigment dispersion as a result of the heat generated from the mixing is 100°C to 150°C, more specifically 120°C to 140°C. The first mixing step, depending on the nature of the ingredients added, can be allowed to continue for several minutes to several hours, such as from 15 minutes to 4 hours, more specifically, from 30 minutes to 2 hours. The temperature of the mixture in the first mixing step can also be regulated such as by the use of a refrigerated heating circulator bath, a cold gun air coolant system, and the like. The heat generated by the mixing evaporates most of the water. Optionally, more water can be removed by, for example, vaporization, evaporation, decantation, centrifugation or other means. With the removal of most of the water, the resulting pigment is now dispersed with the resin and can easily be mixed with one or more ink ingredients to form an SIJ ink. This process thus avoids the tedious and sometimes costly process of breaking down the pigmented aggregates that can form during the drying stage of the pigment making process.

Next, at least one other ink ingredient is added to the pigment dispersion. The other ink ingredients can be, for example, a wax, a colorant, or a resin, or mixtures or combinations thereof. The resin could be, for example, a triamide resin, a bis-urethane resin, or a rosin ester.

After one or more ink ingredients are added to the pigment dispersion, a second mixing step is performed to form an SIJ ink. In the second mixing step the pigment dispersion is mixed with a high-speed rotor-stator which can generate heat. The temperature of the pigment dispersion as a result of the heat generated from the mixing is 100°C to 150°C, more specifically 120°C to 140°C. The second mixing step, depending on the nature of the ingredients added, can be allowed to continue for several minutes to several hours, such as from 5 minutes to 4 hours, more specifically, from 15 minutes to 1 hour.

Any press cake from commercial pigment manufacturers can be used. Such pigment press cakes may, for example, have pigment loadings at 20 to 50 percent dispersed in water. Other pigment press cakes include pigment press cakes having pigment loadings at 10 to 80 percent, 20 to 60 percent, or 30 to 40 percent dispersed in water.

The pigment press cake may contain a variety of pigments and is not limited to any single pigment. Any pigment or colorant can be used. For example, colorants or pigments as used herein include pigment, dye, mixtures of pigment and dye, mixtures of pigments, mixtures of dyes, and the like. For simplicity, the term "colorant" as used herein is meant to encompass such colorants, dyes, pigments, and mixtures, unless specified as a particular pigment or other colorant component. In embodiments, the colorant comprises a pigment, a dye, and mixtures thereof, carbon black, magnetite, black, cyan, magenta, yellow, red, green, blue, orange, violet, and brown pigments and dyes, and mixtures thereof.

In addition to aqueous press cakes, other types of press cakes can be used. For example, mixed aqueous/solvent press cakes such as those press cakes containing a water/acetone mix or a water/ethyl acetate mix can be used. Further examples include solvent-based press cakes, such as alkyd oils or soya oils, or hydrocarbon-based press cakes.

When the pigment is to be incorporated in a non-aqueous system for application to a substrate, it is generally necessary or desirable to remove the residual moisture from the press cake. The press cake typically contains 30 to 80% by weight water, but can contain any amount of water suitable to form the press cake. In an embodiment, the press cake contains 20 to 50% by weight of water.

As the pigment is wetted by the dispersant, the water is driven out of the press cake until only a small percentage of water remains in the pigment dispersion. The last traces of water can be removed by applying a sub-atmospheric pressure and/or heat to the pigment dispersion. Alternatively, this water can be removed from the mixture by decantation, centrifugation or other mechanical means.

Examples of suitable pigment dispersant materials include fatty amides, such as monoamides, triamides, tetra-amides, mixtures thereof, and the like. In one specific embodiment, the amide is a branched triamide. Branched triamides are disclosed in, for example, U.S. Patent 6,860,930.

The flushing agent can be a resin, such as a triamide of the formula 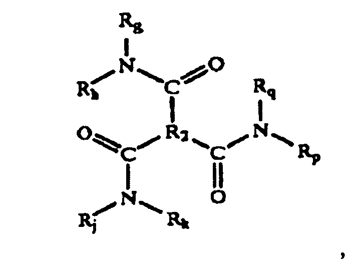 wherein R₂ is (i) an alkylene group having from 3 to 200 carbon atoms, (ii) an arylene group having from 6 to 200 carbon atoms, (iii) an arylalkylene group having from 7 to 200 carbon atoms, or (iv) an alkylarylene group having from 7 to 200 carbon atoms and R_{g}, Rₕ, Rⱼ, Rₖ, Rₚ and R_{q} are each independently (i) a hydrogen atom, (ii) an alkyl group having from 1 to 200 carbon atoms, (iii) an aryl group having from 6 to 200 carbon atoms, (iv) an arylalkyl group having from 6 to 200 carbon atoms, or (v) an alkylaryl group having from 6 to 200 carbon atoms.

The resin can also be, for example, a bis-urethane of the formula 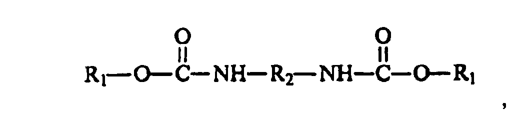 wherein each R₁ is independent of each other (i) an alkyl group having from 1 to 200 carbon atoms, (ii) an aryl group having from 6 to 200 carbon atoms, (iii) an arylalkyl group having from 6 to 200 carbon atoms, or (iv) an alkylaryl group having from 6 to 200 carbon atoms; and R₂ is (i) an alkylene group having from 3 to 200 carbon atoms, (ii) an arylene group having from 6 to 200 carbon atoms, (iii) an arylalkylene group having from 7 to 200 carbon atoms, or (iv) an alkylarylene group having from 7 to 200 carbon atoms.

Additional flushing agents and flushing aids can include unsaturated polyester and/or its derivatives.

Illustrative examples of polymer resins selected for the process and particles of the present disclosure include any of the various polyesters, such as crystalline polyesters, amorphous polyesters, or a mixture thereof. Thus, for example, the particles can be comprised of crystalline polyester resins, amorphous polyester resins, or a mixture of two or more polyester resins where one or more polyester is crystalline and one or more polyester is amorphous.

The crystalline resins, which are available from a number of sources, can possess various melting points of, for example, from 30°C to 120°C, such as from 50°C to 90°C. The crystalline resin may have, for example, a number average molecular weight (Mn), as measured by gel permeation chromatography (GPC) of, for example, from 1,000 to 50,000, and preferably from 2,000 to 25,000. The weight average molecular weight (Mw) of the resin may be, for example, from 2,000 to 100,000, and preferably from 3,000 to 80,000, as determined by GPC using polystyrene standards. The molecular weight distribution (Mw/Mn) of the crystalline resin is, for example, from 2 to to 6, and more specifically, from 2 to 4.

In embodiments, other ingredients are added to pigment dispersion to produce the SIJ ink. The volatile content of the non-aqueous medium used can be removed with heating the resulting ink at below 150°C.

In embodiments, other ingredients may be added to the pigment dispersion. Such other ingredients may optionally include a wax, which can be either a single type of wax or a mixture of two or more different waxes. A single wax can be added to formulations, for example, to improve particular properties, such as hardness, gloss, offset properties, and the like. Alternatively, a combination of waxes can be added to provide multiple properties to the composition.

Suitable examples of waxes include waxes selected from natural vegetable waxes, natural animal waxes, mineral waxes, synthetic waxes and functionalized waxes.

Examples of waxes of embodiments include polypropylenes and polyethylenes, wax emulsions, EPOLENE N-15 commercially available from Eastman Chemical Products, Inc., VISCOL 550-P, a low weight average molecular weight polypropylene available from Sanyo Kasei K.K., and similar materials. Suitable commercially available polymethylenes and polyethylenes usually possess a molecular weight Mw of from 1,000 to 1,500, while suitable commercially available polypropylenes have a molecular weight of 4,000 to 5,000. Examples of functionalized waxes include amines, amides, imides, esters, quaternary amines, carboxylic acids or acrylic polymeremulsion.

Many of the polyethylene and polypropylene compositions useful in embodiments are illustrated in British Pat. No. 1,442,835.

Optional additives may also be introduced to the pigment dispersion in preparing the SIJ ink in any embodiment. Optional additives include surfactants, light stabilizers, UV absorbers, which absorb incident UV radiation and convert it to heat energy that is ultimately dissipated, antioxidants, optical brighteners, which can improve the appearance of the image and mask yellowing, thixotropic agents, dewetting agents, slip agents, foaming agents, anti foaming agents, flow agents, other non-curable waxes, oils, plasticizers, binders, electrical conductive agents, fungicides, bactericides, organic and/or inorganic filler particles, leveling agents, e.g., agents that create or reduce different gloss levels, opacifiers, antistatic agents, dispersants, and the like. In particular, the composition may include, as a stabilizer, a radical scavenger, such as Irgastab UV 10 (Ciba Specialty Chemicals, Inc.).

Additionally, any suitable ink ingredient can be added in the SIJ ink. Examples of suitable ingredients can include paraffins, microcrystalline waxes, polyethylene waxes, ester waxes, fatty acids and other waxy materials, fatty amide containing materials, sulfonamide materials, resinous materials made from different natural sources (tall oil rosins and rosin esters, for example), and many synthetic resins, oligomers, polymers, and copolymers such as further discussed below, and mixtures thereof.

Other suitable carrier materials that can be used in SIJ ink compositions include, for example, isocyanate-derived resins and waxes, such as urethane isocyanate-derived materials, urea isocyanate-derived materials, urethane/urea isocyanate-derived materials, mixtures thereof, and the like.

Another type of ink vehicle may be n-paraffinic, branched paraffinic, and/or aromatic hydrocarbons.

Highly branched hydrocarbons may also be used In addition, the ink vehicle may be an ethoxylated alcohol, such as available from Petrolite and of the general formula 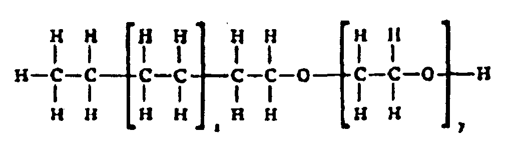 wherein x is an integer of from 1 to 50, such as from 5 to 40 or from 11 to 24 and y is an integer of from 1 to 70, such as from 1 to 50 or from 1 to 40. The materials may have a melting point of from 60°C to 150°C, such as from 70°C to 120°C or from 80°C to 110°C and a molecular weight (Mn) range of from 100 to 5,000, such as from 500 to 3,000 or from 500 to 2,500.

As an additional example, mention may be made of fatty amides, such as monoamides, tetra-amides, mixtures thereof, and the like, for example such as described in U.S. Patent No. 6,858,070. Suitable monoamides may have a melting point of at least 50°C, for example from 50°C to 150°C, although the melting point can be below this temperature. Specific examples of suitable monoamides include, for example, primary monoamides and secondary monoamides.

High molecular weight linear alcohols, such as those available from Petrolite and of the general formula 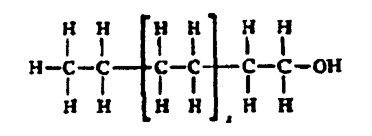 wherein x is an integer of from 1 to 50, such as from 5 to 35 or from 11 to 23, may also be used as the ink vehicle. These materials may have a melting point of from 50°C to 150°C, such as from 70°C to 120°C or from 75°C to 110°C, and a molecular weight (Mn) range of from 100 to 5,000, such as from 200 to 2,500 or from 300 to 1,500.

A still further example includes hydrocarbon-based waxes, such as the homopolymers of polyethylene available from Petrolite and of the general formula 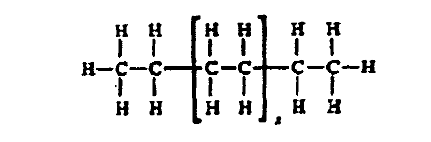 wherein x is an integer of from 1 to 200, such as from 5 to 150 or from 12 to 105. These materials may have a melting point of from 60°C to 150°C, such as from 70°C to 140°C or from 80°C to 130°C and a molecular weight (Mn) of from 100 to 5,000, such as from 200 to 4,000 or from 400 to 3,000.

Another example includes modified maleic anhydride hydrocarbon adducts of polyolefins prepared by graft copolymerization, such as those available from Petrolite and of the general formulas 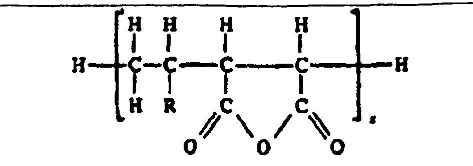 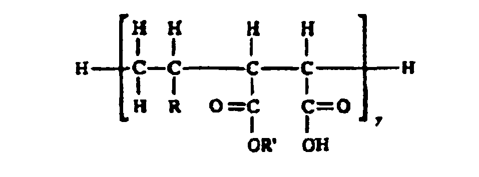 wherein R is an alkyl group with from 1 to 50, such as from 5 to 35 or from 6 to 28 carbon atoms, R' is an ethyl group, a propyl group, an isopropyl group, a butyl group, an isobutyl group, or an alkyl group with from 5 to 500, such as from 10 to 300 or from 20 to 200 carbon atoms, x is an integer of from 9 to 13, and y is an integer of from 1 to 50, such as from 5 to 25 or from 9 to 13, and having melting points of from 50°C to 150°C, such as from 60°C to 120°C or from 70°C to 100°C; those available from Petrolite and of the general formula 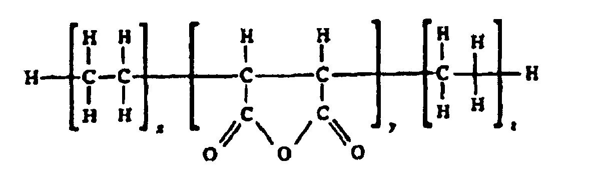 wherein x is an integer of from 1 to 50, such as from 5 to 25 or from 9 to 13, y is 1 or 2, and z is an integer of from 1 to 50, such as from 5 to 25 or from 9 to 13; and those available from Petrolite and of the general formula 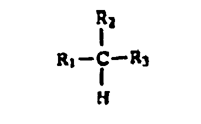 wherein R₁ and R₃ are hydrocarbon groups and R₂ is either of one of the general formulas 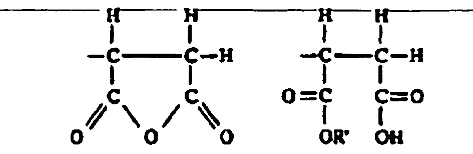 or a mixture thereof, wherein R' is an isopropyl group, which materials may have melting points of from 70°C to 150°C, such as from 80°C to 130°C or from 90°C to 125°C, with examples of modified maleic anhydride copolymers including CERAMER 67 (Mn = 655, Mw/Mn = 1.1), CERAMER 1608 (Mn = 700, Mw/Mn =1.7), and the like.

In addition, the ink vehicles described in U.S. Patent No. 6,906,118 may also be used. Also suitable as ink ingredients are liquid crystalline materials as disclosed in, for example, U.S. Patent No. 5,122,187.

The ink vehicle may comprise one or more of the aforementioned suitable materials.

The ink vehicle may comprise from 60% to 99.5% by weight of the ink, for example from 70% to 98% or from 80% to 95% by weight of the ink.

Many ink vehicles of SIJ inks have an electrical conductivity of essentially zero. Thus, conductivity enhancing agents may be added to the ink in order to provide consistent conductivity to the ink. The conductivity is used as an input signal for a level sensor in the ink reservoir of the inkjet device.

Prior components of an SIJ ink that may have contributed to the electrical conductivity if the inks were colorants such as pigments and dyes, and dodecyl benzene sulfonic acid (DDBSA), as disclosed in U.S. Patent No. 6,015,847.

In embodiments, the conductivity enhancing agent is an organic salt formed from an organic base and an acid. The conductivity enhancing agent does not detrimentally affect any printer parts (for example, printheads or reservoirs of an inkjet device) as do other conductivity enhancing agents (for example, DDBSA).

The organic base of the organic salt of the conductivity enhancing agent may be an organic amine and have at least one long hydrocarbon chain. "Long hydrocarbon chain" refers to, for example, a linear or branched carbon alkyl or aryl chain having from 10 carbons to 50 carbons, such as from 15 to 40 carbons or from 15 carbons to 30 carbons. The long carbon chain of the organic salt allows it to be miscible in the ink.

Examples of organic bases that are suitable ingredients are derived from tertiary amine compounds having the following generic formula, which may include tri-hexadecyl amine (ARMEEN^{®} 316, molecular weight 689).

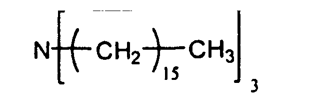

In embodiments the organic bases may be derived from trioctadecyl amine, tridodecyl amine, tritetradecyl amine, trieicosyl amine, tridocosylamine, tritetracosylamine, mixed forms like didodecyl octadecyl amine, didocosyl tetracosyl amine, ditetracosyl tetradecyl amine, and the like, and aryl-aliphatic compounds, such as di(1-decyl-4-nonyl-phenyl) docosyl amine: 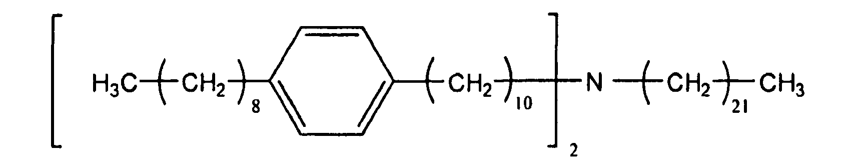 or 4-nonylphenyl dioctadecyl amine, as shown below:

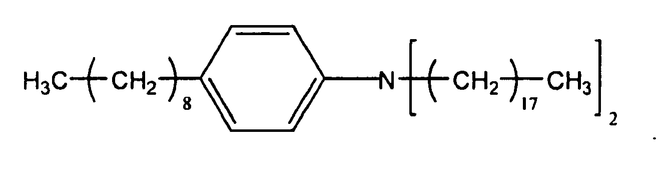

In embodiments, the organic base may be a primary, secondary or tertiary amine. An example of a suitable primary amine may be represented by the general formula 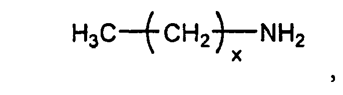 wherein x is an integer from 1 to 50, such as from 10 to 40 or from 12 to 30, for example, a hexadecyl amine. An example of a suitable secondary amine may be represented by the general formula 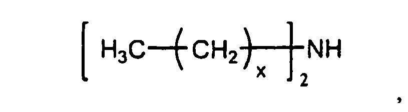 wherein x is an integer from 1 to 50, such as from 10 to 40 or from 12 to 30, for example, a di-octadecyl amine.

Another aspect is that the molecular ion of an acid suitable for use herein has a high mobility, thus enhancing the conductivity of the SIJ ink. This high mobility may be achieved by using a small molecular ion. However, when small molecular ions are used, the solution of the organic salt decreases. Thus, the size of the molecular ion must be sufficient to maintain the solubility of the organic salt in the SIJ ink, while at the same time exhibiting sufficient mobility so as to enhance the conductivity of the SIJ ink.

Examples of acid generated suitable molecular ions that may be used herein include the ions of acids such as trifluoroacetic acid, methane sulfonic acid and trifluoro methane sulfonic acid. Such acids may have a molecular weight from 25 to 250, such as from 25 to 225 or from 50 to 250.

The estimated half-life of the organic salt under a constant temperature of about 120°C is from 15 to 250 days, such as from 20 to 225 days or from 20 to 200 days.

The SIJ ink disclosed herein may contain as an ingredient one organic salt, or a mixture of one or more suitable organic salts, for example from 1 to 10 organic salts, such as from 1 to 4 or from 1 to 2 organic salts. Each organic salt is present in the ink in any effective amount, for example from 0.001 weight percent to 8 weight percent, such as from 0.1 1 weight percent to 5 weight percent or from 0.25 weight percent to 5 weight percent of the ink.

The organic salt described herein imparts a high electrical conductivity to SIJ inks by sufficiently dissociating into molecular ions with high ion mobility. Specifically, the organic salt will dissociate into ions, that is, anions and cations, to provide the SIJ ink with high electrical conductivity during operation of an inkjet device.

The conductivity of the SIJ ink having the conductivity enhancing agent therein may be from 0.01 to 5 µS/cm, such as from 0.05 to 4 µS/cm or from 0.09 to 2.5 µS/cm. Conductivity may be measured by any known method, and herein is measured under melt conditions at about 120°C by placing titanium electrodes in the molten ink and reading the resistivity output on a Rosemount Model 1054B LC Conductivity Meter at a frequency of 60 Hz. In general, the conductivity of a material can be measured in terms of the reciprocal of resistivity, which is a material specific and temperature dependent measurement for electrical resistance.

The organic salts disclosed herein are soluble in the nonpolar organic environment of SIJ inks, demonstrate thermal stability in SIJ inks when an inkjet device is operating, are waxy solids at room temperature, may positively influence the mechanical durability of printed, solid inks, and do not etch or attack printer parts which may contact the organic salts found in the SIJ inks.

Other optional additives such as dispersing agents or surfactants may be present in the inks, typically in amounts of from 0.01 to 20 percent by weight. Plasticizers may be added to the ink vehicle, and may constitute from 1 to 40 percent of the ink vehicle component of the ink. Plasticizers can either function as the ink vehicle or can act as an agent to provide compatibility between the ink components.

Optional antioxidants in the ink may protect the images from oxidation and also may protect the ink components from oxidation while existing as a heated melt in the ink reservoir.

The antioxidant, when present, may be present in the ink in any desired or effective amount, such as from 0.15 percent to 10 percent by weight of the ink or from 0.2 percent to 3 percent by weight of the ink.

The ink can also optionally contain a UV absorber. The optional UV absorbers primarily protect the generated images from UV degradation. When present, the optional UV absorber may be present in the ink in any desired or effective amount, such as from 1 percent to 10 percent by weight of the ink or from 3 percent to 5 percent by weight of the ink.

The inks can be employed in apparatus for direct printing inkjet processes, wherein when droplets of the melted ink are ejected in an imagewise pattern onto a recording substrate, the recording substrate is a final recording substrate. Alternatively, the inks can be employed in indirect (offset) printing inkjet applications, wherein when droplets of the melted ink are ejected in an imagewise pattern onto a recording substrate, the recording substrate is an intermediate transfer member and the ink in the imagewise pattern is subsequently transferred from the intermediate transfer member to a final recording substrate.

The substrate may be any suitable material such as paper, boxboard, cardboard, fabric, a transparency, plastic, glass, wood etc., although the ink is desirably used in forming images on paper.

Examples are set forth below and are illustrative of different compositions and conditions that can be utilized in practicing the disclosure. All proportions are by weight unless otherwise indicated.

### EXAMPLES

### Preparation of Flush Pigments

Flush Pigment Dispersion A: A 1 kg pigment press cake of Hostaperm Pink E02, from Clariant Corporation, is mixed with 1.4 kg of triamide resin (the triamide is described in U.S. Patent No. 6,860,930) and 200g of, PETROLITE® WB-17 (a bis-urethane) obtained from Baker Petrolite, at 120°C for less than about one hour in a Kady® mill by high shear mixing. As the mixing proceeds, the surface of the pigment in the pigment press cake becomes receptive to the triamide resin while the water and potentially other liquids, such as glycols, becomes displaced or flushed from the pigment surface. The water is then removed from the mixture by continued heating from extended shearing to allow its evaporation resulting in a flushed pigmented dispersion having about 20% pigment in the mixture with a trace amount of residual water.

Flush Pigment Dispersion B: A 1 kg pigment press cake of Hotaperm Pink E02 is mixed with 1.4 kg of KE-100 resin (a glyceryl abietate) obtained from Arakawa Chemical Industries Ltd. and 200g of PETROLITE® WB-17 at 120°C for less than about one hour in a Kady® mill. As the mixing proceeds, the surface of the pigment in the pigment press cake becomes receptive to the KE-100 resin while the water and potentially other liquids, such as glycols, becomes displaced or flushed from the pigment surface. The water is then removed from the mixture by continued heating from extended shearing to allow its evaporation resulting in a flushed pigmented dispersion having about 20% pigment in the mixture with a trace amount of residual water.

Flush Pigment Dispersion C: A 1 kg pigment press cake of Hostaperm Pink E02, is mixed with 1.4 kg of triamide resin and 200g of OLOA® 11000 from Chevron Oronite Company, at 120°C for less than about one hour in a Kady® mill. As the mixing proceeds, the surface of the pigment in the pigment press cake becomes receptive to the triamide resin while the water and potentially other liquids, such as glycols, becomes displaced or flushed from the pigment surface. The water is then removed from the mixture by continued heating from extended shearing to allow its evaporation resulting in a flushed pigmented dispersion having about 20% pigment in the mixture with a trace amount of residual water.

Flush Pigment Dispersion D: A 1 kg pigment press cake of PV Fast Blue BG, from Clariant Corporation, is mixed with 1.4 kg of triamide resin and 200g of Bis-urethane, PETROLITE® WB-17, obtained from Baker Petrolite, at 120°C for less than about one hour in a Kady® mill. As the mixing proceeds, the surface of the pigment in the pigment press cake becomes receptive to the triamide resin while the water and potentially other liquids, such as glycols, becomes displaced or flushed from the pigment surface. The water is then removed from the mixture by continued heating from extended shearing to allow its evaporation resulting in a flushed pigmented dispersion having about 20% pigment in the mixture with a trace amount of residual water.

Flush Pigment Dispersion E: A 1 kg pigment press cake of Carbazole Violet, from Sun Chemical Corporation, is mixed with 1.4 kg of triamide resin and 200g of Bis-urethane, PETROLITE® WB-17, obtained from Baker Petrolite, at 120°C for less than about one hour in a Kady® mill. As the mixing proceeds, the surface of the pigment in the pigment press cake becomes receptive to the triamide resin white the water and potentially other liquids, such as glycols, becomes displaced or flushed from the pigment surface. The water is then removed from the mixture by continued heating from extended shearing to allow its evaporation resulting in a flushed pigmented dispersion having about 20% pigment in the mixture with a trace amount of residual water.

Flush Pigment Dispersion F: A 1 kg pigment press cake of Benzimidazolone Orange, from Sun Chemical Corporation, is mixed with 1.4 kg of triamide resin and 200g of Bis-urethane, PETROLITE® WB-17, obtained from Baker Petrolite, at 120°C for less than about one hour in a Kady® mill. As the mixing proceeds, the surface of the pigment in the pigment press cake becomes receptive to the triamide resin while the water and potentially other liquids, such as glycols, becomes displaced or flushed from the pigment surface. The water is then removed from the mixture by continued heating from extended shearing to allow its evaporation resulting in a flushed pigmented dispersion having about 20% pigment in the mixture with a trace amount of residual water.

### Preparation of Inks

Example 1: Flush Pigment Dispersion A is diluted with the remaining ink ingredients forming an ink. The following components were then melted and stir-mixed in a 4 liter beaker at 125°C: Flush Pigment Dispersion A (243 grams); stearyl stearamide wax (KEMAMIDE® S-180, obtained from Crompton Corp., Greenwich, CT, 463.55 g); KE-100 resin (a glycerol ester of a hydrogenated rosin, obtained from Arakawa Chemical Industries Ltd., 309.03 grams; NAUGARD® N445 antioxidant (obtained from Crompton Corp., Greenwich, CT, 4.09 grams), X 1197 polyethylene wax (from Baker Petrolite, 1236.13g), and a urethane resin prepared as described in Example 4 of U.S. Patent 6,309,453 (55.20 grams).

The above ingredients (Flush Pigment Dispersion A, stearyl stearamide wax, KE-100 resin, NAUGARD® N445 antioxidant, X1 197 polyethylene wax, and the urethane resin) are homogenized in an IKA® Ultra Turrax T50 Homogenizer for an additional 60 minutes at 120°C to allow the ink to mix and to remove the trace amount of water remaining in the pigment dispersion. The resulting ink is then filtered through a 1 µm glass fiber cartridge-filter at about 115°C and demonstrates good print quality performance in a Xerox solid inkjet printer.

The various compositions of a pigmented SIJ ink formulation are set forth in Table 1 below:

**Table 1.**

| **Ingredient** | **Weight Percentage** |
|---|---|
| Pigment | 0.5-15% |
| Triamide resin | 5-20% |
| A glycerol ester of a hydrogenated rosin | 0-20% |
| Polyalkylene succinimide | 0-15% |
| Stearyl stearamide | 10-20% |
| Urethane | 0-5% |
| Polyethylene wax | 20-60% |
| bis-urethane | 0 - 5% |
| Antioxidant | 0.2% |

Example 2: Flush Pigment Dispersion B is diluted with the remaining ink ingredients forming an ink. The following components were then melted and stir-mixed in a 4 liter beaker at 125°C: Flush Pigment Dispersion B (243 grams); stearyl stearamide wax (KEMAMIDE® S-180, 463.55 g); triamide resin (309.03 grams); NAUGARD® N445 antioxidant (4.09 grams), X1197 polyethylene wax (1236.13g), and a urethane resin prepared as described in Example 4 of U.S. Patent 6,309,453 (55.20 grams).

The above ingredients are homogenized in an IKA® Ultra Turrax T50 Homogenizer for an additional 60 minutes at 120°C to allow the ink to mix and to remove the trace amount of water remaining in the pigment dispersion. The resulting ink is then filtered through a 1 µm glass fiber cartridge-filter at 15°C and demonstrates good print quality performance in a Xerox solid inkjet printer.

Example 3: Flush Pigment Dispersion C is diluted with the remaining ink ingredients forming an ink. The following components are then melted and stir-mixed in a 4 liter beaker at 125°C: Flush Pigment Dispersion C (243 grams); stearyl stearamide wax (KEMAMIDE® S-180,463.55g); kE-100 resin (309.03 grams); NAUGARD® N445 antioxidant (4.09 grams), X1197 polyethylene wax (1236.13g), and a urethane resin prepared as described in Example 4 of U.S. Patent 6,309,453 (55.20 grams).

The above ingredients are homogenized in an IKA® Ultra Turrax T50 Homogenizer for an additional 60 minutes at 120°C to allow the ink to mix and to remove the trace amount of water remaining in the pigment dispersion. The resulting ink is then filtered through a 1 µm glass fiber cartridge-filter at 115°C and demonstrates good print quality performance in a Xerox solid inkjet printer.

Example 4: Flush Pigment Dispersion D is diluted with the remaining ink ingredients forming an ink. The following components are then melted and stir-mixed in a 4 liter beaker at 125°C: Flush Pigment Dispersion D (243 grams); stearyl stearamide wax (KEMAMIDE® S-180, 463.55 g); KE-100 resin (309.03 grams); NAUGARD® N445 antioxidant (4.09 grams), X1197 polyethylene wax (1236.13g), and a urethane resin prepared as described in Example 4 of U.S. Patent 6,309,453 (55.20 grams).

The above ingredients are homogenized in an IKA® Ultra Turrax T50 Homogenizer for an additional 60 minutes at 120°C to allow the ink to mix and to remove the trace amount of water remaining in the pigment dispersion. The resulting ink is then filtered through a 1 µm glass fiber cartridge-filter at 115°C and demonstrates good print quality performance in a Xerox solid inkjet printer.

Example 5: Flush Pigment Dispersion E is diluted with the remaining ink ingredients forming an ink. The following components were then melted and stir-mixed in a 4 liter beaker at 125°C: Flush Pigment Dispersion E (243 grams); stearyl stearamide wax (KEMAMIDE® S-180, 463.55 g); KE-100 resin (309.03 grams); NAUGARD® N445 antioxidant (4.09 grams), X1197 polyethylene wax (1236.13g), and a urethane resin prepared as described in Example 4 of U.S. Patent 6,309,453 (55.20 grams).

The above ingredients are homogenized in an IKA® Ultra Turrax T50 Homogenizer for an additional 60 minutes at 120°C to allow the ink to mix and to remove the trace amount of water remaining in the pigment dispersion. The resulting ink is then filtered through a 1 µm glass fiber cartridge-filter at 115°C and demonstrates good print quality performance in a Xerox solid inkjet printer.

Example 6: Flush Pigment Dispersion F is diluted with the remaning ink ingredients forming an ink. The following components are then melted and stir-mixed in a 4 liter beaker at 125°C: Flush Pigment Dispersion F (243 grams); stearyl stearamide wax (KEMAMIDE® S-180, 463.55 g); KE-100 resin (309.03 grams); NAUGARD® N445 antioxidant (4.09 grams), X1197 polyethylene wax (1236.13g), and a urethane resin prepared as described in Example 4 of U.S. Patent 6,309,453 (55.20 grams).

The above ingredients are homogenized in an IKA® Ultra Turrax T50 Homogenizer for an additional 60 minutes at 120°C to allow the ink to mix and to remove the trace amount of water remaining in the pigment dispersion. The resulting ink is then filtered through a 1 µm glass fiber cartridge-filter at 115°C and demonstrates good print quality performance in a Xerox solid inkjet printer.

## Claims

1. A process for preparing a solid inkjet ink, comprising
applying a first mixing step to a pigment and a flushing agent, wherein the pigment is part of an aqueous press cake;
flushing the pigment from an aqueous phase to a non-aqueous phase to form a pigment dispersion;
adding one or more ink ingredients to the pigment dispersion; and
applying a second mixing step to the pigment dispersion to incorporate the pigment dispersion with the one or more ink ingredients to form a solid inkjet ink.

2. The process of claim 1, wherein the flushing agent comprises at least one resin and one or more of a surfactant, a volatile polar vehicle, a dispersant, an oligomer or a polymer.

3. The process of claim 1, wherein the ink ingredient is a wax, a colorant, a resin, or combinations thereof.

4. The process of claim 1, wherein the flushing agent is a triamide resin of the formula 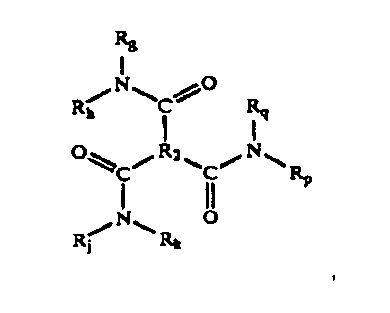 wherein R₂ is (i) an alkylene group having from 3 carbon atoms to 200 carbon atoms, (ii) an arylene group having from 6 carbon atoms to 200 carbon atoms, (iii) an arylalkylene group having from 7 carbon atoms to 200 carbon atoms, or (iv) an alkylarylene group having from 7 carbon atoms to 200 carbon atoms, and R_{g}, Rₕ, Rⱼ, Rₖ, Rₚ and R_{q} are each independently (i) a hydrogen atom, (ii) an alkyl group having from 1 carbon atoms to 200 carbon atoms, (iii) an aryl group having from 6 carbon atoms to 200 carbon atoms, (iv) an arylalkyl group having from 6 carbon atoms to 200 carbon atoms, or (v) an alkylaryl group having from 6 carbon atoms to 200 carbon atoms.

5. The process according to claim 1, wherein the flushing agent is a glycerol ester of a hydrogenated rosin.

6. The process according to claim 1, wherein the flushing agent is a mixture of a glycerol ester of a hydrogenated rosin and a triamide resin of the formula 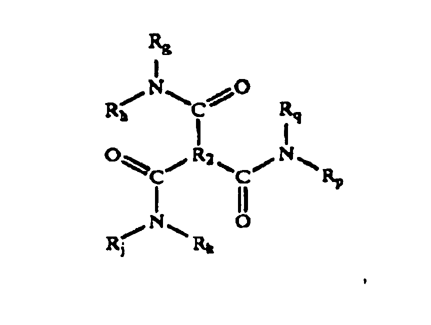 wherein R₂ is (i) an alkylene group having from 3 carbon atoms to 200 carbon atoms, (ii) an arylene group having from 6 carbon atoms to 200 carbon atoms, (iii) an arylalkylene group having from 7 carbon atoms to 200 carbon atoms, or (iv) an alkylarylene group having from 7 carbon atoms to 200 carbon atoms, and R_{g}, Rₕ, Rⱼ, Rₖ, Rₚ and R_{q} are each independently (i) a hydrogen atom, (ii) an alkyl group having from 1 carbon atoms to 200 carbon atoms, (iii) an aryl group having from 6 carbon atoms to 200 carbon atoms, (iv) an arylalkyl group having from 6 carbon atoms to 200 carbon atoms, or (v) an alkylaryl group having from 6 carbon atoms to 200 carbon atoms.

7. The process according to claim 1, wherein the non-aqueous phase comprises an oligomer or a polymer.

8. The process according to claim 1, wherein the first mixing step is high torque mixing or high shear mixing.

9. The process of according to claim 1, wherein the second mixing step is high shear mixing.

10. The process according to claim 1, further comprising removing a substantial portion of water before adding the one or more ink ingredients, wherein the water is removed by vaporization, evaporation, decantation, or centrifugation.

11. A method of forming an image, comprising applying the solid inkjet ink prepared by the process of claim 1 to a substrate.

## Patentansprüche

1. Verfahren zum Herstellen einer festen Tintenstrahltinte, umfassend
das Anwenden eines ersten Mischschrittes auf ein Pigment und ein Flushmittel, wobei das Pigment Teil eines wässrigen Presskuchens ist;
das Flushen des Pigments von einer wässrigen Phase in eine nicht-wässrige Phase, um eine Pigmentdispersion zu bilden;
das Zugeben von einem oder mehreren Tintenbestandteilen zu der Pigmentdispersion; und
das Anwenden eines zweiten Mischschrittes auf die Pigmentdispersion, um die Pigmentdispersion mit dem einen oder mehreren Tintenbestandteilen zu vereinigen unter Bildung einer festen Tintenstrahltinte.

2. Verfahren nach Anspruch 1, wobei das Flushmittel wenigstens ein Harz und eines oder mehrere von einem Tensid, einem flüchtigen polaren Vehikel, einem Dispergiermittel, einem Oligomer oder einem Polymer umfasst.

3. Verfahren nach Anspruch 1, wobei es sich bei dem Tintenbestandteil um ein Wachs, ein Farbmittel, ein Harz oder Kombinationen davon handelt.

4. Verfahren nach Anspruch 1, wobei das Flushmittel ein Triamidharz der folgenden Formel ist 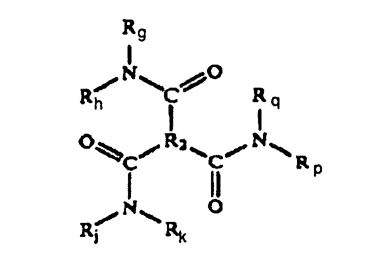 wobei R₂ (i) eine Alkylengruppe mit 3 Kohlenstoffatomen bis 200 Kohlenstoffatomen, (ii) eine Arylengruppe mit 6 Kohlenstoffatomen bis 200 Kohlenstoffatomen, (iii) eine Arylalkylengruppe mit 7 Kohlenstoffatomen bis 200 Kohlenstoffatomen oder (iv) eine Alkylarylengruppe mit 7 Kohlenstoffatomen bis 200 Kohlenstoffatomen ist und R_{g}, Rₕ, Rⱼ, Rₖ, Rₚ und R_{q} jeweils unabhängig (i) ein Wasserstoffatom, (ii) eine Alkylgruppe mit 1 Kohlenstoffatom bis 200 Kohlenstoffatomen, (iii) eine Arylgruppe mit 6 Kohlenstoffatomen bis 200 Kohlenstoffatomen, (iv) eine Arylalkylgruppe mit 6 Kohlenstoffatomen bis 200 Kohlenstoffatomen oder (v) eine Alkylarylgruppe mit 6 Kohlenstoffatomen bis 200 Kohlenstoffatomen sind.

5. Verfahren nach Anspruch 1, wobei das Flushmittel ein Glycerinester von einem hydrierten Kolophonium ist.

6. Verfahren nach Anspruch 1, wobei das Flushmittel eine Mischung von einem Glycerinester
von einem hydrierten Kolophonium und einem Triamidharz der folgenden Formel ist 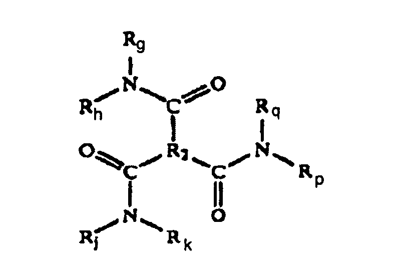 wobei R₂ (i) eine Alkylengruppe mit 3 Kohlenstoffatomen bis 200 Kohlenstoffatomen, (ii) eine Arylengruppe mit 6 Kohlenstoffatomen bis 200 Kohlenstoffatomen, (iii) eine Arylalkylengruppe mit 7 Kohlenstoffatomen bis 200 Kohlenstoffatomen oder (iv) eine Alkylarylengruppe mit 7 Kohlenstoffatomen bis 200 Kohlenstoffatomen ist und R_{g}, Rₕ, Rⱼ, Rₖ, Rₚ und R_{q} jeweils unabhängig (i) ein Wasserstoffatom, (ii) eine Alkylgruppe mit 1 Kohlenstoffatom bis 200 Kohlenstoffatomen, (iii) eine Arylgruppe mit 6 Kohlenstoffatomen bis 200 Kohlenstoffatomen, (iv) eine Arylalkylgruppe mit 6 Kohlenstoffatomen bis 200 Kohlenstoffatomen oder (v) eine Alkylarylgruppe mit 6 Kohlenstoffatomen bis 200 Kohlenstoffatomen sind.

7. Verfahren nach Anspruch 1, wobei die nicht-wässrige Phase ein Oligomer oder ein Polymer umfasst.

8. Verfahren nach Anspruch 1, wobei der erste Mischschritt ein Mischen mit hohem Drehmoment oder ein Mischen mit hoher Scherkraft ist.

9. Verfahren nach Anspruch 1, wobei der zweite Mischschritt ein Mischen mit hoher Scherkraft ist.

10. Verfahren nach Anspruch 1, außerdem umfassend das Entfernen eines wesentlichen Anteils des Wassers vor dem Zugeben des einen oder der mehreren Tintenbestandteile, wobei das Wasser durch Verdunsten, Eindampfen, Dekantieren oder Zentrifugation entfernt wird.

11. Verfahren zum Bilden eines Bildes, umfassend das Aufbringen der durch das Verfahren nach Anspruch 1 hergestellten festen Tintenstrahltinte auf ein Substrat.

## Revendications

1. Procédé de préparation d'une encre solide pour jet d'encre, comprenant
l'application d'une première étape de mélange à un pigment et un agent d'extraction, dans lequel le pigment fait partie d'un gâteau aqueux de presse ;
l'extraction du pigment d'une phase aqueuse à une phase non aqueuse pour former une dispersion de pigment ;
l'ajout d'un ou plusieurs ingrédient(s) d'encre à la dispersion de pigment ; et
l'application d'une deuxième étape de mélange à la dispersion de pigment pour incorporer la dispersion de pigment avec l'un ou les plusieurs ingrédient(s) d'encre pour former une encre solide pour jet d'encre.

2. Procédé selon la revendication 1, dans lequel l'agent d'extraction comprend au moins une résine et un ou plusieurs d'un agent tensioactif, d'un véhicule polaire volatil, d'un dispersant, d'un oligomère ou d'un polymère.

3. Procédé selon la revendication 1, dans lequel l'ingrédient d'encre est une cire, une matière colorante, une résine, ou des combinaisons de celles-ci.

4. Procédé selon la revendication 1, dans lequel l'agent d'extraction est une résine triamidique de la formule 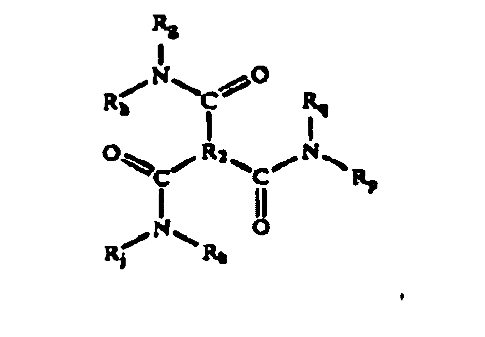 dans laquelle R₂ est (i) un groupe alkylène ayant de 3 atomes de carbone à 200 atomes de carbone, (ii) un groupe arylène ayant de 6 atomes de carbone à 200 atomes de carbone, (iii) un groupe arylalkylène ayant de 7 atomes de carbone à 200 atomes de carbone, ou (iv) un groupe alkylarylène ayant de 7 atomes de carbone à 200 atomes de carbone, et R_{g}, Rₕ, Rⱼ, Rₖ, Rₚ et R_{q} sont chacun indépendamment (i) un atome d'hydrogène, (ii) un groupe alkyle ayant de 1 atome de carbone à 200 atomes de carbone, (iii) un groupe aryle ayant de 6 atomes de carbone à 200 atomes de carbone, (iv) un groupe arylalkyle ayant de 6 atomes de carbone à 200 atomes de carbone, ou (v) un groupe alkylaryle ayant de 6 atomes de carbone à 200 atomes de carbone.

5. Procédé selon la revendication 1, dans lequel l'agent d'extraction est un ester de glycérol d'une colophane hydrogénée.

6. Procédé selon la revendication 1, dans lequel l'agent d'extraction est un mélange d'un ester de glycérol d'une colophane hydrogénée et d'une résine triamidique de la formule 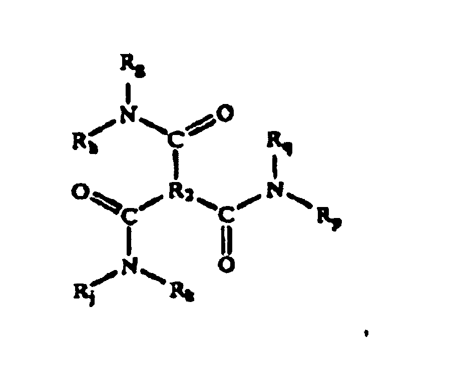 dans laquelle R₂ est (i) un groupe alkylène ayant de 3 atomes de carbone à 200 atomes de carbone, (ii) un groupe arylène ayant de 6 atomes de carbone à 200 atomes de carbone, (iii) un groupe arylalkylène ayant de 7 atomes de carbone à 200 atomes de carbone, ou (iv) un groupe alkylarylène ayant de 7 atomes de carbone à 200 atomes de carbone, et R_{g}, Rₕ, Rⱼ, Rₖ, Rₚ et R_{q} sont chacun indépendamment (i) un atome d'hydrogène, (ii) un groupe alkyle ayant de 1 atome de carbone à 200 atomes de carbone, (iii) un groupe aryle ayant de 6 atomes de carbone à 200 atomes de carbone, (iv) un groupe arylalkyle ayant de 6 atomes de carbone à 200 atomes de carbone, ou (v) un groupe alkylaryle ayant de 6 atomes de carbone à 200 atomes de carbone.

7. Procédé selon la revendication 1, dans lequel la phase non aqueuse comprend un oligomère ou un polymère.

8. Procédé selon la revendication 1, dans lequel la première étape de mélange est un mélange à couple élevé ou un mélange à cisaillement élevé.

9. Procédé selon la revendication 1, dans lequel la deuxième étape de mélange est un mélange à cisaillement élevé.

10. Procédé selon la revendication 1, comprenant en outre l'élimination d'une partie substantielle d'eau avant l'ajout de l'un ou des plusieurs ingrédient(s) d'encre, dans lequel l'eau est éliminée par vaporisation, évaporation, décantation, ou centrifugation.

11. Procédé de formation d'une image, comprenant l'application de l'encre solide pour jet d'encre préparée par le procédé selon la revendication 1 à un substrat.
